(19) Europäisches Patentamt
European Patent Office
Office européen des brevets

(11) **EP 4 573 885 A1**

(12) **EUROPÄISCHE PATENTANMELDUNG**

(43) Veröffentlichungstag:
   **25.06.2025   Patentblatt 2025/26**

(21) Anmeldenummer: **23219673.3**

(22) Anmeldetag: **22.12.2023**

(51) Internationale Patentklassifikation (IPC):
   **A01G 7/04** (2006.01)      **A01G 9/24** (2006.01)
   **G06Q 50/02** (2024.01)

(52) Gemeinsame Patentklassifikation (CPC):
   **A01G 7/045; A01G 9/249; G06Q 10/063;
   G06Q 50/02**

(84) Benannte Vertragsstaaten:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Benannte Erstreckungsstaaten:
   **BA**
   Benannte Validierungsstaaten:
   **KH MA MD TN**

(71) Anmelder: **Gottfried Wilhelm Leibniz Universität
   Hannover
   30167 Hannover (DE)**

(72) Erfinder:
   • **Freiknecht, Malte
     30167 Hannover (DE)**

   • **Böcker, Konrad
     30161 Hannover (DE)**

(74) Vertreter: **Weidner Stern Jeschke
   Patentanwälte Partnerschaft mbB
   Wilhelm-Herbst-Straße 5
   28359 Bremen (DE)**

Bemerkungen:
   Ein Antrag gemäss Regel 139 EPÜ auf Berichtigung
   für die Beschreibung liegt vor. Über diesen Antrag
   wird im Laufe des Verfahrens vor der
   Prüfungsabteilung eine Entscheidung getroffen
   (Richtlinien für die Prüfung im EPA, A-V, 3.).

(54) **PRODUKTIONSVORRICHTUNG, LICHTSTEUERUNGSVORRICHTUNG UND VERFAHREN
ZUM ERMITTELN EINER ERSTEN SONNENLICHTINTENSITÄTSMATRIX**

(57)    Die Erfindung betrifft eine Produktionsvorrichtung für zumindest eine Pflanze, wobei die zumindest eine Pflanze ein Saatgut, ein Keimling, ein Sprössling, ein Trieb, eine Blüte und/oder eine Frucht ist, aufweisend eine Gebäudehülle, wobei innerhalb der Gebäudehülle zumindest ein erster Pflanzenaufstellbereich mit einer ersten künstlichen Lichtquelle angeordnet ist, wobei dem ersten Pflanzenaufstellbereich eine erste in einem elektronischen Speicher hinterlegte Sonnenlichtintensitätsmatrix sowie eine Solllichtintensität zugeordnet ist und wobei die erste künstliche Lichtquelle den ersten Pflanzenaufstellbereich zumindest teilweise beleuchtet, wobei an einer Außenmantelfläche der Gebäudehülle ein Sensor angeordnet ist, welcher datenaustauschend mit einer Auswerteeinheit verbunden und eingerichtet ist, eine aktuelle Sonnenlichtintensität zu ermitteln, wobei die Produktionsvorrichtung ausgestaltet und eingerichtet ist, mittels der Auswerteeinheit anhand der ermittelten aktuellen Sonnenlichtintensität, der Solllichtintensität und der ersten Sonnenlichtintensitätsmatrix eine erste künstliche Lichtleistung zu ermitteln und ein Signal an die erste künstliche Lichtquelle zu senden, welche im Ansprechen auf das Signal eine erste künstliche Lichtleistung aussendet.

Figur 1

EP 4 573 885 A1

## Beschreibung

Die Erfindung betrifft eine Produktionsvorrichtung für zumindest eine Pflanze, eine Lichtsteuerungsvorrichtung und ein Verfahren zum Ermitteln einer ersten Sonnenlichtintensitätsmatrix.

Der Pflanzenanbau in Gebäuden ist als alternative Anbaumethode bekannt und wird auch Indoor Farming genannt. Die Pflanzen werden dabei in Gebäuden unter kontrollierten Wachstumsbedingungen und insbesondere künstlichem Licht angebaut. Häufig sind die Pflanzen vertikal und horizontal gestaffelt im Gebäude angeordnet. Diese Ausprägung wird als Indoor Vertical Farming (IV Farming) bezeichnet. Die genutzte Fläche ist durch die vertikale Staffelung um ein Vielfaches größer als eine ebenerdige Anbaufläche.

Durch die optimierten und geregelten Wachstumsbedingungen in sogenannten IV Farms wird die Produktivität erheblich gesteigert. Neben der Zuführung von künstlichem Licht wird häufig auch der Wasserverbrauch beziehungsweise die Bewässerung und der Nährstoffverbrauch beziehungsweise die Düngung auf den Stoffwechsel der Pflanzen optimiert gesteuert. Vorteilhafterweise ist in IV Farms zumeist kein Einsatz von Pestiziden notwendig. Schließlich wird auch die Temperatur und Luftfeuchtigkeit der häufig mit $CO_2$ angereicherten Raumluft in vielen IV Farms kontrolliert gesteuert.

Um konstante Produktionsbedingungen zu realisieren, werden die Gebäudehüllen insbesondere isoliert und lichtundurchlässig konstruiert. Derart ausgeführte IV Farms weisen zumeist einen hohen Stromverbrauch und somit hohe Betriebskosten auf. Erste Ansätze nutzen traditionelle Gewächshäuser mit transparenten oder teiltransparenten Gebäudehüllen, um derart natürliche Energie zu nutzen und den Stromverbrauch der IV Farm zu reduzieren.

Durch die Nutzung von natürlichem Licht entstehen orts- und zeitabhängig ungleichmäßige Energieintensitäten in der IV Farm, deren Unterschiede bei einer gleichmäßigen Zufuhr von künstlichen Energiequellen entsprechend bestehen bleiben. Derartige Intensitätsunterschiede führen mit anderen Worten zu ungleichmäßigen Wachstumsbedingungen der in einer IV Farm gezüchteten Pflanzen an unterschiedlichen Aufstellorten in der IV Farm.

In der US 2021/0112728 A1 ist ein Pflanzsystem offenbart, welches Schalen aufnehmen kann, welche für unterschiedliche Wachstumsstadien der Pflanzen eingerichtet sind. Die jeweiligen Gegebenheiten werden an den Modulen erfasst, beispielsweise Licht, Wärme, usw., und mittels eines Belichtungs-, Heiz- und Kühlsystems sowie Ventilation optimiert.

Die KR 102022111434 A offenbart ein Anbausystem für Pflanzen in einem Container. Dabei kombiniert das Anbausystem die Container mit einem Förderband zu einem mobilen Anbausystem. Derart wird das Pflanzenzuchtbett kontinuierlich bewegt und an eine Nährstoffflüssigkeit herangeführt. Zudem weist das Anbausystem ein Lichtversorgungssystem auf, welches natürliches Licht zur Beleuchtung und zur Erzeugung von Wärme nutzt. Dabei wird das Licht derart aufgespalten, dass Wellenlängenbereiche, welche photosynthesewirksam sind, gebündelt werden und schließlich künstlich dem Pflanzraum zugeführt werden, wenn ein Lichtmangel vorherrscht. Der Mangel an Licht wird jeweils an den Pflanzen sensorisch erfasst.

Eine Pflanzenfabrik mit gemischter Lichtquelle und einem beweglichen Dach, welches geöffnet werden kann, ist in der CN 109156225 A offenbart.

Die CN 109380109 A offenbart ein IV Farm Operating Produktionssystem mit einem Beleuchtungssystem. Das Beleuchtungssystem umfasst natürliches Licht sowie künstliches Licht, welches mittels LED- und Laserlampen erzeugt wird. Dabei werden mittels eines Mess- und Steuerungssystems die Spektren der Sonne, der LED und der Laserlampen kombiniert und den Pflanzen zugeführt. Die Lichtsteuerung erfolgt dabei ganzheitlich für die gesamte IV Farm.

Der bekannte Stand der Technik weist den Nachteil auf, dass die verschiedenen Pflanzbereiche in der IV Farm unterschiedliche lokale Gegebenheiten vorfinden. Die Intensität des natürlichen Lichtes erreicht mit anderen Worten die verschiedenen Bereiche in der IV Farm nicht gleichmäßig. So kann beispielsweise ein weit unten angeordneter Pflanzbereich weniger intensiv von natürlichem Licht bestrahlt sein, als ein weiter oben angeordneter Pflanzbereich. Zusätzlich oder alternativ können Bauelemente, andere Pflanzbereiche und/oder Pflanzenträger Schatten auf einen Pflanzenbereich werfen, sodass eine Intensität weiter unterschiedlich, auch deutlich unterschiedlich zu Nachbarpflanzbereichen, sein kann. Schließlich können die Auswirkungen des Intensitätsunterschieds an den unterschiedlichen Pflanzbereichen auch im Tagesverlauf und/oder Jahreszeitenverlauf inhomogen sein.

Die bekannte Maßnahme zum Ausgleich der Intensitätsunterschiede mittels Sensoraufnahme der Gegebenheiten an den jeweiligen Pflanzenbereichen bedeutet, dass eine große Anzahl Sensoren in die IV Farm integriert werden muss. Um einen lokalen Bedarf zu ermitteln, müssen die jeweiligen Sensordaten ausgewertet und verarbeitet werden. Die entsprechend erforderliche Anordnung von Sensoren an jedem Pflanzenbereich ist zum einen mit hohen Investitionskosten verbunden und erfordert zum anderen eine komplexe Auswertung. Schließlich geht mit der Vielzahl Sensoren ein hoher Wartungsaufwand einher.

Folglich besteht ein Bedarf einer verbesserten Produktionsstätte für die kommerzielle Kultivierung von Pflanzen in einem Gebäude, welche einen geringeren Energiebedarf aufweist und dabei ganzheitlich qualitativ hochwertige Wachstumsbedingungen für zu kultivierende Pflanzen bietet.

Aufgabe der Erfindung ist es, den Stand der Technik zu verbessern.

Gelöst wird die Aufgabe durch eine Produktionsvorrichtung für zumindest eine Pflanze, wobei die zumindest eine Pflanze ein Saatgut, ein Keimling, ein Sprössling, ein Trieb, eine Blüte und/oder eine Frucht ist, wobei die Produktionshülle eine Gebäudehülle aufweist, wobei innerhalb der Gebäudehülle zumindest ein erster Pflanzenaufstellbereich mit einer ersten künstlichen Lichtquelle angeordnet ist, wobei dem ersten Pflanzenaufstellbereich eine erste, in einem elektronischen Speicher hinterlegte, Sonnenlichtintensitätsmatrix sowie eine Sollintensität zugeordnet ist und wobei die erste künstliche Lichtquelle den ersten Pflanzenaufstellbereich zumindest teilweise beleuchtet, und wobei an einer Außenmantelfläche der Gebäudehülle ein Sensor angeordnet ist, welcher datenaustauschend mit einer Auswerteeinheit verbunden und eingerichtet ist, eine aktuelle Sonnenlichtintensität zu ermitteln, wobei die Produktionsvorrichtung ausgestaltet und eingerichtet ist, mittels der Auswerteeinheit anhand der ermittelten aktuellen Sonnenlichtintensität, der Solllichtintensität und der Sonnenlichtintensitätsmatrix eine erste künstliche Lichtleistung zu ermitteln und ein Signal an die erste künstliche Lichtquelle zu senden, welche im Ansprechen auf das Signal eine erste künstliche Lichtleistung aussendet.

Unter Verwendung genau eines Sensors wird somit das Umgebungslicht detektiert und damit die Sensordaten ermittelt, welche zur lokal optimalen Lichtsteuerung der gesamten Produktionsvorrichtung notwendig ist. Vorteilhafterweise kann eine derartige Lichtsteuerung in eine bestehende IV Farm, welche insbesondere eine zumindest teillichtdurchlässige Gebäudehüllle aufweist, integriert werden.

Durch die lokal optimierte Lichtsteuerung wird eine für das Pflanzenwachstum optimale Lichtintensität unter Einbezug eines Großteils natürlicher Lichtenergie realisiert. Die Nutzung natürlichen Lichts reduziert vorteilhafterweise den Bedarf künstlichen Lichts und damit den Stromverbrauch der Produktionsvorrichtung signifikant.

Ein wesentlicher Gedanke beruht insbesondere darauf, dass ein insbesondere einziger (außerhalb oder innerhalb liegender) Sensor die Umgebungsbedingungen, insbesondere eine Sonnenlichtintensität, ermittelt und aus den Sensorwerten des Sensors unter Verwendung vorbekannter Parametrierungen für (insbesondere mehrere) vordefinierte Bereiche innerhalb der Gebäudehülle der IV Farm lokale Bedarfe, insbesondere lokale Bedarfe an künstlichem Licht, ermittelt werden.

Folgendes Begriffliche sei erläutert:

Unter einer "Produktionsvorrichtung" wird insbesondere eine Indoor Vertical Farm (IV Farm) verstanden. Vertical Farming ist eine Form einer kommerziellen Kultivierung von Pflanzen in Gebäuden. Alternativ können auch Tiere, insbesondere zur Nahrungsmittelproduktion vorgesehene Tiere, in IV Farms untergebracht sein. Die Produktionsvorrichtung kann ein- und/oder mehrstöckig sein. Die Anbaufläche einer IV Farm gegenüber der durch die IV Farm versiegelte Fläche ist auf Grund der vertikalen Staffelung der Pflanzenaufstellbereiche und/oder der engen horizontalen Staffelung vorteilhafterweise um ein Vielfaches größer.

Eine Produktionsvorrichtung weist zumindest eine "Gebäudehülle" auf. Als eine "Gebäudehülle" wird die insbesondere äußere Ummantelung der Produktionsvorrichtung verstanden. Der außenliegende Bereich der Gebäudehülle wird auch Außenmantelfläche genannt. Die Gebäudehülle kann zumindest ein insbesondere lichtdurchlässiges Bauelement, zum Beispiel Glas, Plexiglas und/oder Kunststoff und/oder ein halblichtdurchlässiges Bauelement, z.B. Kunststoff oder beschichtetes Glas, und/oder ein lichtundurchlässiges Bauelement, z.B. Steine oder Holz, aufweisen. Die Gebäudehülle umschließt mit anderen Worten einen Pflanzenanbaubereich, auch als Produktionsraum bezeichnet, und schließt diesen somit vorteilhafterweise gegenüber einem äußeren Bereich, insbesondere Umwelteinflüssen direkt ausgesetzten Bereich, ab.

Die dem Pflanzenanbaubereich zugewandte Seite der Gebäudehülle kann auch als innenliegend und die abgewandte Seite als außenliegend bezeichnet werden.

Die Gebäudehülle kann zumindest ein Gebäudehülleelement oder eine Vielzahl Gebäudehülleelemente umfassen. Ein Gebäudehülleelement kann zumindest eine Öffnung, z.B. Tür, Fenster oder Tor sein. Die Öffnung kann zum Betreten und/oder Befahren der Gebäudehülle und/oder zur Belüftung der Gebäudehülle eingerichtet sein. Die Öffnungen, insbesondere Türen und/oder Tore, können vorteilhafterweise derart ausgeführt sein, dass bei ihrem Öffnen eine möglichst geringe Beeinflussung der Wachstumsbedingungen innerhalb der IV Farm auftritt. Hierzu können die Türen und/oder Tore beispielsweise Schleusen o.ä. aufweisen.

Die Gebäudehülle kann als Gebäudehülleelement zusätzlich oder alternativ eine innenliegende und/oder außenliegende Beschattungsvorrichtung aufweisen. Zusätzlich oder alternativ kann die Gebäudehülle als Gebäudehülleelement Einrichtungen zur Belüftung des Pflanzenanbaubereichs aufweisen. Zumindest ein Parameter, auch Umgebungsparameter genannt, welcher außenliegend vorherrscht, kann einen Einfluss auf einen innenliegenden Parameter haben. Die Beschattungs- und/oder Belüftungseinrichtungen tragen vorteilhafterweise zur Realisierung optimaler Wachstumsbedingungen in der IV Farm bei.

Die Produktionsvorrichtung kann zusätzlich oder alternativ Lagersysteme, z.B. Regale mit Regalböden und/oder Systeme zur Pflanzenkultivierung aufweisen, wie zum Beispiel Bewässerungssysteme, Nährstoffsysteme, Belüftungssysteme und/oder Ventilationssysteme. Die Lagersysteme sind vorteilhafterweise flexibel ausgestaltet, so dass unterschiedliche große Pflanzbereiche in der IV Farm realisierbar sind und/oder diese an Bedarfe anpassbar sind.

In einer Ausprägung sind in der Produktionsvorrichtung Gänge angeordnet, damit die Pflanzbereiche zugänglich sind. Der Zugang zum z.B. bestücken, pflegen und/oder reinigen der Pflanzenbereiche kann manuell erfolgen. Zusätzlich oder alternativ kann der Zugang automatisiert erfolgen. Hierzu kann die IV Farm beispielsweise Regalbediengeräte und/oder Roboter aufweisen. Die Anordnung der Gänge veränderbar sein. Mittels der Gänge ist vorteilhafterweise eine gute Zugänglichkeit der Pflanzenaufstellbereiche realisiert.

Ein Saatgut, ein Keimling, ein Sprössling, ein Trieb, eine Blüte und/oder eine Frucht wird als "Pflanze" bezeichnet. Zusätzlich oder alternativ kann auch ein Tier in einer erfindungsgemäßen Produktionsvorrichtung herangezogen und dem Nahrungsmittelkreislauf zugeführt werden. Eine Frucht ist insbesondere ein Obst oder Gemüse.

Innerhalb der Gebäudehülle ist zumindest ein erster "Pflanzenaufstellbereich" angeordnet. Ein Pflanzenaufstellbereich ist insbesondere ein Bereich, der sich in Bezug auf seine Position innerhalb der Produktionsvorrichtung von einem zweiten Pflanzenaufstellbereich unterscheidet. Ein erster Pflanzenaufstellbereich, zweiter Pflanzenaufstellbereich und/oder weiterer Pflanzenaufstellbereich kann beispielsweise eine Pflanzwanne aufweisen. Zudem oder alternativ kann der erste Pflanzenaufstellbereich eine erste künstliche Lichtquelle aufweisen.

Die "künstliche Lichtquelle", auch als Beleuchtung oder Beleuchtungsquelle bezeichnet, kann insbesondere eine LED-Lampe, insbesondere eine dimmbare LED-Lampe, und/oder eine Laserlampe und/oder ein anderes Leuchtmittel sein. Die erste künstliche Lichtquelle weist insbesondere eine Stromversorgung auf, welche kabelgebunden oder mittels Batterien ausgeführt sein kann. Zusätzlich oder alternativ kann die erste künstliche Lichtquelle ein Schaltungselement aufweisen, welches insbesondere zum Ein- und/oder Ausschalten der ersten künstlichen Lichtquelle eingerichtet ist. Eine dimmbare künstliche Lichtquelle ist vorteilhafterweise dazu eingerichtet, eine im Wesentlichen stufenlos einstellbare Lichtintensität auszustrahlen.

Als ein Element zur Datenspeicherung wird der "Speicher" verstanden. Der Speicher kann ein Festplattenlaufwerk, zum Beispiel HDD und/oder Solid State-Laufwerk (SSD) sein. Der Speicher ist insbesondere zur speichertechnischen Hinterlegung von definierten lokalen Intensitätswerten zumindest eines Pflanzenaufstellbereiches in Abhängigkeit einer äußeren natürlichen Lichteinstrahlung und/oder von formelbasierten Intensitätswerten zumindest eines Pflanzenaufstellbereiches in Abhängigkeit einer äußeren natürlichen Lichteinstrahlung eingerichtet. Die Verwendung eines handelsüblichen Speichers reduziert vorteilhafterweise die Herstellungskosten der Produktionsvorrichtung. Änderungen an den gespeicherten Daten können durch die Verwendung eines zentralen Speichers vorteilhafterweise wenig komplex und somit einfach umgesetzt werden.

Die Speicherwerte können datenbanktechnisch in dem Speicher hinterlegt sein. Der Speicher kann wiederbeschreibbar sein. In einer besonderen Ausprägung ist jedem einzelnen der Vielzahl Pflanzenaufstellbereiche eine Vielzahl von Intensitäten natürlichen Lichtes und den damit gekoppelten Intensitäten am Pflanzenaufstellbereich zugeordnet oder mittels der speichertechnischen Hinterlegung ermittelbar. Die Zuordnung kann somit insbesondere formelbasiert und/oder wertbasiert sein.

Unter einer "Sonnenlichtintensitätsmatrix" wird insbesondere eine Vielzahl Werte und/oder Formeln verstanden, wobei die Werte oder das Ergebnis angewendeter Formeln jeweils eine tages- und/oder jahreszeitabhängige lokale Lichtintensität an einem vordefinierten Pflanzenaufstellbereich in Abhängigkeit einer natürlichen Lichtintensität, welche auch als Umgebungslichtintensität bezeichenbar ist, repräsentieren. Die Sonnenlichtintensitätsmatrix ordnet somit einer natürlichen Lichtintensität unter Berücksichtigung tages- und jahreszeitabhängiger Parameter des Pflanzenaufstellbereichs logisch insbesondere genau eine lokale Lichtintensität zu.

In einem nicht einschränkenden Beispiel sei eine Sonnenlichtintensitätsmatrix für einen ersten Pflanzenaufstellbereich derart ausgeprägt, dass in einer zweidimensionalen Datenbank in einer ersten Zeile eine erste natürliche Lichtleistung und in einer zweiten Zeile eine zweite natürliche Lichtleistung hinterlegt ist und in einer ersten Spalte eine erste Tageszeit und in einer zweiten Spalte eine zweite Tageszeit. In einem ersten Feld sei die erste Zeile und die erste Spalte gekreuzt und ein erster Wert aufgeführt, welcher die lokale Sonnenlichtintensität an dem ersten Pflanzenaufstellbereich bei der ersten natürlichen Lichtleistung und der ersten Tageszeit repräsentiert.

Eine, insbesondere unter Berücksichtigung der jeweiligen Bedarfe der Pflanzen gekoppelte, vordefinierte, optimale Lichtintensität wird als "Solllichtintensität" verstanden. Die Solllichtintensität an einem ersten Pflanzenaufstellbereich kann sich von einer Solllichtintensität an einem zweiten Pflanzenaufstellbereich unterscheiden. Dies ist insbesondere der Fall, wenn eine erste Pflanze an dem ersten Pflanzenaufstellbereich einen anderen Bedarf aufweist, wie eine zweite Pflanze an dem zweiten Pflanzenaufstellbereich. Die Solllichtintensität repräsentiert somit vorteilhafterweise die zur Herstellung optimaler Wachstumsbedingungen herzustellende Beleuchtung eines Pflanzenaufstellbereiches.

Unter einem "Sensor" wird insbesondere ein Lichtsensor verstanden. Mit anderen Worten wird unter einem Sensor ein Sensor verstanden, welcher dazu eingerichtet ist, eine Lichtintensität zu ermitteln. Der Sensor ist in einer Ausführungsform ein optischer Sensor. Der optische Sensor kann ein optischer Detektor und/oder ein optoelektronischer Sensor und/oder ein Photodetektor sein. Der optische Sensor ist insbesondere ausgestaltet und eingerichtet, eine Lichtintensität zu ermitteln. Der Sensor kann fest und/oder temporär an der Produktionsvorrichtung angeordnet sein. Der Sensor kann außerhalb der Produktionsvorrichtung an der Gebäudehülle der Produktionsvorrichtung angeordnet sein.

Eine Witterungsbeständigkeit des Sensors führt vorteilhafterweise zu einer hohen Qualität der ermittelten Sensordaten. Alternativ oder ergänzend kann der Sensor auch innerhalb der Produktionsvorrichtung angeordnet sein, insbesondere hinter einer lichtdurchlässigen Gebäudehülle. Der Sensor ist insbesondere direkter Sonnenstrahlung ausgesetzt. Mittels des insbesondere einzigen Sensors, welcher insbesondere außerhalb an der Produktionsvorrichtung und/oder in der Nähe der Produktionsvorrichtung angeordnet ist, wird vorteilhafterweise die Zufuhr künstlichen Lichts insbesondere innerhalb der Produktionsvorrichtung und insbesondere an einer Vielzahl Positionen innerhalb der Produktionsvorrichtung, welche besonders vorteilhafterweise jeweilige Parametrierungen aufweisen können, eingestellt oder geregelt oder gesteuert.

Zusätzlich kann ein Temperatursensor an einer Innenwand der Gebäudehülle der Produktionsvorrichtung angeordnet sein. Zusätzlich oder alternativ kann ein im Wesentlichen gleich oder ähnlich zu der Beleuchtungssteuerung ausgeführtes Temperatursteuerungssystem realisiert sein, sodass die Produktionsvorrichtung weiter eingerichtet und ausgestaltet ist, mittels der Temperatursteuervorrichtung und unter Verwendung von Sensordaten des einzelnen Temperatursensors eine Temperatursteuerung für zumindest den ersten Pflanzenaufstellbereich und/oder eine Vielzahl weiterer Pflanzenaufstellbereiche zu realisieren. Zusätzlich kann ein Sensor zur Ermittlung von einer Luftfeuchtigkeit an insbesondere der Innenmantelfläche und/oder im Innenraum der Produktionsvorrichtung angeordnet sein. Durch weitere Sensoren und Steuerungseinrichtungen können die Wachstumsbedingungen an den Pflanzenaufstellbereichen vorteilhafterweise zusätzlich optimal geregelt werden.

Eine kabeltechnische und/oder funktechnische Verbindung zwischen insbesondere zwei elektronischen Elementen wird als technische Umsetzung einer "datenaustauschenden" Verbindung verstanden. Ein Datenaustausch kann von einem der verbundenen Elemente ausgehend und/oder anfordernd sein. Ein Datenaustausch kann in einer besonderen Ausprägung mittels eines Signals erfolgen. Ein signalbasierter Datenaustausch weist vorteilhafterweise im Wesentlichen geringe Latenzen auf.

Unter einer "Auswerteeinheit" wird insbesondere ein elektronisches Element verstanden, welches insbesondere programmtechnisch dazu eingerichtet ist, unter Verwendung von Daten zumindest eine Operation durchzuführen und ein derart ermitteltes Ergebnis auszugeben und/oder zu speichern. In einer vorteilhaften Ausprägung ist eine Auswerteeinheit eine Lichtsteuerungsvorrichtung oder ein Element einer Lichtsteuerungsvorrichtung. Eine Auswerteeinheit weist insbesondere eine Stromversorgung auf, welche kabelgebunden und/oder batteriebetrieben sein kann. Eine erfindungsgemäße Auswerteeinheit ist insbesondere mit dem Sensor und dem Speicher datenaustauschend verbunden und erhält von diesen Daten, wobei die Auswerteeinheit von dem Speicher vordefinierte Daten, insbesondere zumindest eine Sonnenlichtintensitätsmatrix und/oder eine Solllichtintensität, erhält und von dem Sensor aktuelle Sonnenlichtintensitätsdaten. Die programmtechnische Ausgestaltung der Auswerteeinheit der Produktionsvorrichtung ist insbesondere eingerichtet, anhand der sensorisch ermittelten aktuellen Sonnenlichtintensität und der vordefinierten Solllichtintensität an dem Pflanzenbereich und der ersten Sonnenlichtintensitätsmatrix eine künstliche Lichtleistung zu ermitteln. Die erste künstliche Lichtleistung ist mit anderen Worten diejenige Leistung, welche benötigt wird, um die natürliche Lichtleistung, welche an dem Pflanzenaufstellbereich in Abhängigkeit einer natürlichen Sonnenlichtintensität anliegt derart zu ergänzen, dass die Solllichtintensität an dem ersten Pflanzenaufstellbereich realisiert ist. Die Auswerteeinheit ist in einer besonderen Ausprägung dazu eingerichtet zeitgleich die jeweiligen künstlichen Lichtleistungen für eine Mehrzahl Pflanzenaufstellbereiche in Abhängigkeit einer aktuellen Sonnenlichtintensität und unter Berücksichtigung der jeweiligen Solllichtintensitäten und der jeweiligen Sonnenlichtintensitätsmatrizen zu ermitteln. Die Auswerteeinheit realisiert somit vorteilhafterweise zentral die Ermittlung des Bedarfs künstlichen Lichts. Weiter vorteilhafterweise können Optimierungen der Lichtsteuerung zentral mittels der Auswerteeinheit erfolgen.

Durch das Aussenden eines Signals an die erste künstliche Lichtquelle, wobei das Signal die notwendige erste künstliche Lichtleistung repräsentiert, erfolgt mittels der Produktionsvorrichtung die Steuerung der ersten künstlichen Lichtquelle dahingehend, dass diese die erste künstliche Lichtleistung aussendet. Somit wird vorteilhafterweise die Herstellung der optimalen Wachstumsbedingungen an dem ersten Pflanzenaufstellbereich realisiert.

Zusammenfassend realisiert die erfindungsgemäße Produktionsvorrichtung unter Verwendung nur eines Sensors eine Lichtsteuerung für die gesamte Produktionsvorrichtung mit einer Mehrzahl Pflanzenaufstellbereiche.

Zur Definition der ersten Sonnenlichtintensitätsmatrix und/oder weiterer Sonnenlichtintensitätsmatrizen, kann wie nachfolgend beschrieben vorgegangen werden: ein digitales 3D-Modell des Produktionsraums der Produktionsvorrichtung kann erstellt werden. Das 3D-Modell kann insbesondere die Abmessungen der Gebäudehülle, die Abmessungen und Positionierung der Lagereinrichtungen und/oder weiterer Bauelemente und/oder Produktionseinrichtungen, z.B. Lichtquellen, aufweisen welchen zusätzlich oder alternativ Eigenschaften, z.B. Wärme- und/oder Lichtdurchlässigkeiten und/oder Reflexionseigenschaften und/oder Absorptionseigenschaften zugeordnet seien können. Zusätzlich oder alternativ können in dem 3D-Modell der erste Pflanzenaufstellbereich und/oder eine Vielzahl Pflanzenaufstellbereiche definiert sein. Zur Erstellung des digitalen 3D-Modells kann beispielsweise eine CAD-Software genutzt werden. Das 3D-Modell kann in eine CFD-Umgebung (Computational Fluid Dynamics) integriert sein. In der CFD-Umgebung kann die Sonne zusätzlich oder alternativ als Strahlungsquelle definiert sein. Mittels zumindest eines Simulationsdurchlaufs wird in Abhängigkeit einer Sonnenlichtintensität die Ausbreitung der Sonnenstrahlung durch und in der Produktionsvorrichtung anhand der vordefinierten Parameter der Produktionsvorrichtung berechnet und somit jeweilige lokale Lichtintensitäten ermittelt. Die lokalen Lichtintensitäten werden insbesondere auf den ersten Pflanzenaufstellbereich bzw. die Vielzahl Pflanzenaufstellbereiche bezogen ermittelt und in der ersten Sonnenlichtintensitätsmatrix bzw. weiteren Sonnenlichtintensitätsmatrizen gespeichert. Der beschriebene Vorgang wird insbesondere für die datums- und tageszeitabhängige Sonnenlichtintensität bzw. Sonnenstellung wiederholt durchgeführt und die jeweiligen Ergebnisse den jeweiligen Sonnenlichtintensitätsmatrizen zugeordnet und gespeichert. Vorteilhafterweise ergibt sich aus der Zusammenstellung der Ergebnisse der Simulationsläufe die erste Sonnenlichtintensitätsmatrix bzw. die Vielzahl Simulationsmatrizen.

Änderungen an der Produktionsvorrichtung können vorteilhafterweise formelbasiert und/oder mittels eines Faktors in die Simulationsergebnisse integriert werden. Dabei kann es erforderlich sein, dass ein und/oder mehrere Simulationsläufe wiederholt werden.

Alternativ kann die Sonnenlichtintensitätsmatrix aus einer Vielzahl lokal, insbesondere sensorbasiert ermittelter lokalen Intensitätswerten in Abhängigkeit einer jeweilig vordefinierten Parametrierung einer Sonnenlichtintensität abgeleitet werden. Hierzu kann zumindest der erste Pflanzenaufstellbereich oder eine Vielzahl Pflanzenaufstellbereiche mit einem jeweiligen Sensor, insbesondere einem Lichtsensor, eingerichtet sein, welcher die Lichtintensitäten misst, welche über einen vordefinierten Messzeitraum gespeichert werden, ebenso, wie Messwerte der Sonnenlichtintensität. Derart können schließlich Bezüge zwischen der Sonnenlichtintensität und der lokalen, an dem ersten Pflanzenaufstellbereich wirkenden, Sonnenlichtintensität hergestellt und als erste Sonnenlichtintensitätsmatrix gespeichert werden. Eine Definition der Sonnenlichtintensitätsmatrix mittels Sensordatenfusion lokaler Sonnenlichtintensitäten und "globaler" Sonnenlichtintensitäten, welche außerhalb der Produktionsvorrichtung gemessen werden, kann vorteilhafterweise bereits vorhandene Sensorik einer Produktionsvorrichtungen zur Ermittlung der Sonnenlichtintensitätsmatrizen verwendet und anschließend rückgebaut werden. So dass nach dem Rückbau eine erfindungsgemäße Lichtsteuerung unter Verwendung des insbesondere einen Sensors für im Wesentlichen den gesamten Innenraum der Produktionsvorrichtung erfolgt.

In einer Ausführungsform ist die Auswerteeinheit mit einem Dateneingang datenaustauschend mit dem Speicher und dem Sensor verbunden und mittels eines Datenausgangs datenaustauschend mit der ersten künstlichen Lichtquelle verbunden. Der Dateneingang bzw. Datenausgang realisiert vorteilhafterweise das Empfangen bzw. Aussenden zumindest eines Signals und/oder einer Mehrzahl Signale zeitgleich. Derart ist vorteilhafterweise eine einfache Integration der Auswerteeinheit in die Produktionsvorrichtung realisiert.

Die Produktionsvorrichtung weist in einer Ausführungsform zusätzlich einen zweiten Pflanzenaufstellbereich, welchem eine zweite, in dem elektronischen Speicher hinterlegte, Sonnenlichtintensitätsmatrix und eine zweite Solllichtintensität zugeordnet ist, und eine zweite künstliche Lichtquelle, welche zumindest und/oder teilweise den zweiten Pflanzenaufstellbereich beleuchtet, auf, wobei die Produktionsvorrichtung weiter ausgestaltet und eingerichtet ist, mittels der Auswerteeinheit anhand der aktuellen Sonnenlichtintensität und der zweiten Sonnenlichtintensitätsmatrix eine zweite künstliche Lichtleistung zu ermitteln und ein zweites Signal an die zweite künstliche Lichtquelle zu senden, welche im Ansprechen auf das zweite Signal die zweite künstliche Lichtleistung ausstrahlt, wobei die erste künstliche Lichtleistung der zweiten künstlichen Lichtleistung entspricht und/oder unterschiedlich zu der zweiten künstlichen Lichtleistung ist.

Derart wird vorteilhafterweise eine künstliche Lichtintensität an einem zweiten Pflanzenaufstellbereich von dem insbesondere einzigen Sensor abhängig gesteuert. Es kann zusätzlich oder alternativ ein dritter Pflanzenaufstellbereich, ein vierter Pflanzenaufstellbereich und/oder weitere Pflanzenaufstellbereiche in der Produktionsvorrichtung angeordnet sein. Der dritte Pflanzenaufstellbereich, vierte Pflanzenaufstellbereich und/oder weitere Pflanzenaufstellbereich weist im Wesentlichen dieselbe Einrichtung wie der erste Pflanzenaufstellbereich und/oder der zweite Pflanzenaufstellbereich auf und die Auswerteeinheit ist entsprechend weiter dazu eingerichtet, die künstliche Lichtintensität an dem dritten Pflanzenaufstellbereich und/oder weiteren Pflanzenaufstellbereichen im Wesentlichen analog zur Lichtsteuerung für den ersten Pflanzenaufstellbereich und den zweiten Pflanzenaufstellbereich zu steuern. Vorteilhafterweise kann derart eine Vielzahl Pflanzenaufstellbereiche in einer Produktionsvorrichtung unter Berücksichtigung der Sensordaten eines insbesondere einzigen Sensors und der jeweiligen Sonnenlichtintensitätsmatrizen und Solllichtintensitäten lichttechnisch gesteuert werden. Weiter vorteilhafterweise können den verschiedenen Pflanzenaufstellbereichen jeweilig unterschiedliche Solllichtintensitäten zugeordnet sein, sodass eine Kultivierung von Pflanzen unterschiedlicher Status in der Lichtsteuerung realisiert ist.

In einer Ausführungsform weist der erste Pflanzenaufstellbereich insbesondere zumindest einen Teilbereich einer ersten Pflanze und/oder ein Pflanzensubstrat auf.

Mit anderen Worten kann der erste Pflanzenaufstellbereich z.B. einen Teilbereich der ersten Pflanze und ein erstes Volumen eines Pflanzsubstrats, die gesamte erste Pflanze und ein zweites Volumen eines Pflanzsubstrats und/oder die erste Pflanze und eine zweite Pflanze und ein drittes Volumen eines Pflanzsubstrats usw. umfassen. Das Pflanzensubstrat kann insbesondere Erde sein. In das Pflanzensubstrat kann insbesondere ein Keimling und/oder Sprössling eingebracht sein und/oder eine Pflanze hierin wurzeln. Der erste Pflanzenaufstellbereich ist dabei vorteilhafterweise derart parametrierbar, dass derart der Bereich, in welchem optimale Wachstumsbedingungen zu realisieren sind, einstellbar ist.

Vorteilhafterweise kann der Pflanzenaufstellbereich so definiert sein, dass mittels der ersten künstlichen Lichtquelle ausschließlich ein Teilbereich einer ersten Pflanze, die komplette erste Pflanze und/oder mehrere Pflanzen beschienen werden. Mit anderen Worten kann die Definition des ersten Pflanzenaufstellbereiches vorteilhafterweise unter Berücksichtigung der Beleuchtungserfordernisse der zu kultivierenden Pflanze ausgeführt sein.

Die erste künstliche Lichtleistung ergibt sich in einer Ausführungsform aus der ermittelten aktuellen Sonnenlichtintensität in Abhängigkeit der Solllichtintensität und eines Korrekturfaktors. Der Korrekturfaktor kann insbesondere mittels einer Blackbox-Simulation mittelbar ermittelt sein. Bei einer Blackbox-Simulation wird das Simulationssystem ausschließlich von außen beurteilt, ohne dass der Nutzer oder Tester die Produktionsvorrichtung vordefiniert. Hierfür können an dem zumindest ersten Pflanzenaufstellbereich einmalig sensorische Werte ermittelt und zum Training der Simulation herangezogen werden. Eine Blackbox-Simulation nutzt vorteilhafterweise Methoden aus dem Bereich künstliche Intelligenz (KI) und/oder Deep Learning zur Ermittlung der Sonnenlichtintensitätsmatrizen.

Zusätzlich oder alternativ kann der Korrekturfaktor je Pflanzenaufstellbereich rechnerisch ermittelt und damit bekannt sein. Zur Ermittlung eines Korrekturfaktors kann vorteilhafterweise eine sogenannte Whitebox-Simulation durchgeführt werden.

Der Korrekturfaktor kann ein Wert und/oder eine Formel sein. Änderungen an der Produktionsvorrichtung können vorteilhafterweise formelbasiert und/oder mittels eines Faktors in einen Korrekturfaktor integriert sein. Dabei kann es erforderlich sein, dass ein oder mehrere Simulationsläufe wiederholt werden.

Bei einem bekannten Korrekturfaktor können insbesondere technische Daten, wie zum Beispiel die Lichtdurchlässigkeit der Gebäudehülle, eine Beschattung des ersten Pflanzenaufstellbereiches und/oder eine Reflexion auf den ersten Pflanzenaufstellbereich, berücksichtigt sein. Zusätzlich oder alternativ kann der Korrekturfaktor eine Lichtdurchlässigkeit der Gebäudehülle berücksichtigen. Der Korrekturfaktor kann zusätzlich oder alternativ eine Beschattung des ersten Pflanzenaufstellbereiches berücksichtigen. Eine Beschattung kann beispielsweise durch Bewässerungsvorrichtungen, Pflanzbehälter, Lagerungseinrichtungen, bautechnische Elemente, wie zum Beispiel Stützen, und/oder Beleuchtungselemente, wie zum Beispiel Leuchtmittel und/oder Kabel, verursacht sein. Die Beschattung des ersten Pflanzenaufstellbereiches durch insbesondere ein Element kann lokal im Tagesverlauf und/oder Jahresverlauf unterschiedlich ausgeprägt sein. Die unterschiedliche Ausprägung kann sich auf eine Position und/oder Größe beziehen. Mit anderen Worten repräsentiert der Korrekturfaktor einen Einfluss des aktuellen natürlichen Lichts und/oder einer oder mehrerer künstlicher Lichtquellen auf den ersten Pflanzenaufstellbereich. Vorteilhafterweise repräsentiert der Korrekturfaktor alle Einflüsse auf die Lichtintensität an dem ersten Pflanzenaufstellbereich.

Die ermittelte aktuelle Sonnenlichtintensität ist dabei insbesondere ausschließlich mittels eines insbesondere einzigen Sensors ermittelt. Der Stromverbrauch einer Produktionsvorrichtung mit einem insbesondere einzigen Sensor zur Ermittlung der aktuellen Sonnenlichtintensität und der Verwendung einer Auswertevorrichtung zur Ermittlung der ersten künstlichen Lichtleistung realisiert vorteilhafterweise eine energiesparende Lichtsteuerung. Hierbei wird zum einen das natürliche Licht bestmöglich zur Beleuchtung des ersten Pflanzenaufstellbereiches genutzt und nur eine geringstmögliche Anzahl von Sensoren verwendet, was weiter zu einem optimierten Gesamtenergieverbrauch beiträgt.

In einer Ausführungsform ist der erste Pflanzenaufstellbereich an einer Lagerungseinrichtung angeordnet. Die "Lagerungseinrichtung" kann beispielsweise ein Regal mit zumindest einem Regalboden oder einer Vielzahl Regalböden sein. Die Regalböden sind insbesondere vertikal übereinander angeordnet. Zusätzlich oder alternativ kann die Lagerungseinrichtung eine Mehrzahl oder Vielzahl Regale umfassen, welche insbesondere an ihren kurzen Seiten in Reihe stehend nebeneinander angeordnet sind. Schließlich kann die Lagerungseinrichtung eine Vielzahl Regalreihen umfassen, welche nach den zuvor beschriebenen Ausprägungen ausgestaltet sein können. Die Lagerungseinrichtungen können mit einer Aufstellfläche und/oder untereinander insbesondere temporär verbunden, z.B. mittels Schraubverbindung, sein. Die Verwendung handelsüblicher Lagereinrichtungen realisiert vorteilhafterweise geringe Herstellungskosten der Produktionsvorrichtung.

In einer Lagerungseinrichtung ist zumindest eine Mehrzahl Pflanzenaufstellbereiche insbesondere säulenartig vertikal übereinander angeordnet. Dabei kann ein jeweiliger Pflanzenaufstellbereich beispielsweise einen Regalboden umfassen. Zusätzlich oder alternativ kann der erste Pflanzenaufstellbereich an der Lagerungseinrichtung neben einer Vielzahl weiterer Pflanzenaufstellbereiche reihenartig horizontal nebeneinander in einer der Raumrichtungen angeordnet sein. Die erste Raumrichtung kann dabei insbesondere in einer Längserstreckung der Lagerungseinrichtung orientiert sein und eine zweite Raumrichtung insbesondere in einer Quererstreckung der Lagerungseinrichtung orientiert sein. Zusätzlich oder alternativ kann die Lagerungseinrichtung sich über mehr als ein Stockwerk erstrecken beziehungsweise eine ähnliche Lagerungseinrichtung in zumindest einem zweiten Stockwerk der Produktionseinrichtung angeordnet sein. Durch die Verwendung im Wesentlichen ähnlicher Lagerungseinrichtungen können Wartungsaufwände reduziert sein.

Vorteilhafterweise realisiert die erfindungsgemäße Produktionsvorrichtung eine Reduktion der Stromkosten für die künstliche Beleuchtung um 48 Prozent gegenüber bekannten Indoor Vertical Farms.

Vorteilhafterweise hat sich gezeigt, dass im Vergleich zu einem herkömmlichen Gewächshaus eine Effizienzsteigerung von circa 23 Prozent, bezogen auf den gesamten Energiehaushalt einer erfindungsgemäßen Produktionsvorrichtung, ergibt. Dies insbesondere unter Berücksichtigung des erhöhten Klimatisierungsbedarf einer Gebäudehülle, welche insbesondere Glas aufweist, im Vergleich zu einer wärmeisolierten Produktionshalle.

In die erfindungsgemäße Produktionsvorrichtung können vorteilhafterweise einfach weitere Steuerungssysteme, z.B. Bewässerungs-, Belichtungs- und Belüftungssysteme, integriert werden. Darüber hinaus ist die erfindungsgemäße Produktionsvorrichtung insbesondere modular gestaltet, sodass die Elemente der Produktionsvorrichtung mit geringem Aufwand angepasst und/oder erweitert und/oder reduziert werden können. Die geographische Lage und auch die architektonischen Gegebenheiten sind in der erfindungsgemäßen Produktionsvorrichtung vorteilhafterweise unmittelbar berücksichtigt.

In einem zweiten Aspekt wird die Aufgabe gelöst durch eine Lichtsteuerungsvorrichtung zum Steuern von künstlichen Beleuchtungsquellen in einer Produktionsvorrichtung. Die Lichtsteuerungsvorrichtung kann der Auswerteeinheit entsprechen und/oder diese umfassen. Die Produktionsvorrichtung entspricht einer zuvor beschriebenen Produktionsvorrichtung. Die Lichtsteuerungsvorrichtung weist insbesondere einen Dateneingang, mittels welchem die Lichtsteuerungsvorrichtung von einem Sensor erste Sensordaten, welche eine aktuelle Sonnenlichtintensität repräsentieren, und von einem Speicher einen ersten Analyseparameter, welcher eine lokale Sonnenlichtintensitätsmatrix repräsentiert, und einen zweiten Analyseparameter, welcher einen lokalen Lichtintensitätssollwert, auch Solllichtintensität genannt, repräsentiert, empfängt, und einen Datenausgang, mittels welchem die Lichtsteuerungsvorrichtung datenaustauschend mit zumindest einer künstlichen Lichtquelle verbunden ist, wobei die Lichtsteuerungsvorrichtung programmtechnisch dazu eingerichtet ist, unter Verwendung der ersten Sensordaten, des ersten Analyseparameters und des zweiten Analyseparameters eine benötigte künstliche Lichtleistung zu parametrieren und als Steuerungssignal an die künstliche Lichtquelle zu übermitteln, welche im Ansprechen auf das Steuerungssignal die benötigte künstliche Lichtleistung ausgibt. Der erste Analyseparameter ist insbesondere die erste Sonnenlichtintensitätsmatrix. Zusätzlich oder alternativ ist der zweite Analyseparameter insbesondere der Lichtintensitätssollwert, welcher dem ersten Pflanzenaufstellbereich zugeordnet ist.

Unter "programmtechnisch dazu eingerichtet sein" wird verstanden, dass die Lichtsteuerungsvorrichtung unter Verwendung der beschriebenen Parameter die künstliche Lichtleistung parametriert.

$$M_{Soll\,i} - \dot{E}_{Sensor} \cdot M_{Sim\,i} = M_{LED\,i}$$

Formel 1: Parametrierung der künstlichen Lichtleistung

Dabei ist die aktuelle, insbesondere mittels des Sensors ermittelte, Sonnenlichtintensität als $\dot{E}_{Sensor}$ benannt. Somit entspricht $\dot{E}_{Sensor}$ im Wesentlichen in Echtzeit, der aktuellen Lichtintensität des Sonnenlichtes und wird insbesondere in der Einheit Lumen (lm) angegeben. Darüber hinaus ist $M_{Soll\,i}$ insbesondere die für den jeweiligen Pflanzbereich vordefinierte Solllichtintensität für optimale Wachstumsbedingungen an dem jeweiligen Pflanzenaufstellbereich, welche insbesondere speichertechnisch hinterlegt ist. In einer Ausführungsform für i = 1 repräsentiert $M_{Soll\,1}$ entsprechend die vordefinierte Solllichtintensität für optimale Wachstumsbedingungen an dem ersten Pflanzenaufstellbereich. $M_{Soll\,i}$ ist vorteilhafterweise $0 < M_{Soll\,i} > 1$ und wird insbesondere in der Einheit Lumen (lm) angegeben. Der nicht einschränkenden Ausführungsform weiter folgend ist der, dem insbesondere ersten Pflanzenaufstellbereich und der aktuellen Sonnenlichtintensität $\dot{E}_{Sensor}$ zugeordnete, lokale Sonnenlichtintensitätswert $M_{Sim\,1}$ der ersten Sonnenlichtintensitätsmatrix entnommen, welche insbesondere wie obenstehend mittels Simulation oder Sensordatenauswertung ermittelt, für den ersten Pflanzenaufstellbereich geltend und ebenfalls insbesondere speichertechnisch hinterlegt ist. Durch die Anwendung der Formel 1 auf die vorgenannte exemplarische Ausführungsform für i = 1 und somit mittels Subtraktion der, unter Berücksichtigung des lokalen Sonnenlichtintensitätswerts $M_{Sim\,1}$ angepassten, aktuellen Sonnenlichtintensität $\dot{E}_{Sensor}$ ergibt sich die Stellgröße $M_{LED\,1}$, welche den Bedarf an künstlichen Lichtleistung am ersten Pflanzenaufstellbereich, insbesondere die lokal benötigte LED-Lichtleistung, angibt, welche schließlich insbesondere unter Vermittlung von Leistungselektronik von einer dem ersten Pflanzenaufstellbereich zugeordneten ersten Lichtquelle ausgesendet wird. Auch $M_{LED\,i}$ wird insbesondere in der Einheit Lumen (lm) angegeben.

Die Formel 1 kann für den ersten Pflanzenaufstellbereich und jeden weiteren Pflanzenaufstellbereich jeweils angewendet werden und das jeweilige Ergebnis zur Lichtsteuerung verwendet werden. Zusätzlich oder alternativ kann die Lichtsteuerung für eine Vielzahl Pflanzenaufstellbereiche gleichzeitig als Matrizenoperation der nachfolgenden Formel 2 folgend ausgeführt werden.

$$M_{Soll\,i=1...n} - \dot{E}_{Sensor} \cdot M_{Sim\,i=1...n} = M_{LED\,i=1...n}$$

Formel 2: Parametrierung der künstlichen
Lichtleistungsverteilung

Nachfolgend sei eine, nicht einschränkende exemplarische Ausführungsform der Berechnung der benötigten Lichtleistungsverteilung, welche eine Vielzahl von lokalen Bedarfen künstlicher Lichtleistung für die jeweiligen Pflanzen-aufstellbereiche ermittelt, gezeigt:

$$\begin{bmatrix} 500 & 500 & 500 \\ 500 & 500 & 500 \\ 500 & 500 & 500 \end{bmatrix} - 500 \times \begin{bmatrix} 1 & 1 & 1 \\ 0.9 & 0.8 & 0.7 \\ 0.8 & 0.7 & 0.6 \end{bmatrix} = \begin{bmatrix} 0 & 0 & 0 \\ 50 & 100 & 150 \\ 100 & 150 & 200 \end{bmatrix}$$

Formel 3: Exemplarische Parametrierung einer künstlichen

Lichtleistungsverteilung

Die in Formel 3 gezeigte exemplarische Parametrierung einer künstlichen Lichtleistungsverteilung umfasst neun Pflanzenaufstellbereiche, für welche sämtlich jeweils die vordefinierte Solllichtintensität $M_{Soll\ i=1...9}$ = 500 $lm$ einzustellen ist. Die aktuelle Sonnenlichtintensität sei $\dot{E}_{sensor}$ = 500 $lm$, wodurch sich die jeweiligen Sonnenlichtintensitätswert $M_{Sim\ i=1...3}$ = 1, $M_{Sim\ i=4}$ = 0.9, $M_{Sim\ i=5}$ = 0.8, $M_{Sim\ i=6}$ = 0.7, $M_{Sim\ i=7}$ = 0.8, $M_{Sim\ i=8}$ = 0.7, $M_{Sim\ i=9}$ = 0.6 ergeben. Mittels Anwendung der Formel 2 folgt eine künstliche Lichtleistungsverteilung mit folgenden Stellgröße des Bedarfs der jeweiligen künstlichen Lichtintensität von $M_{LED\ i=1...3}$ = 0, $M_{LED\ i=4}$ = 50, $M_{LED\ i=5}$ = 100, $M_{LED\ i=6}$ = 150, $M_{LED\ i=7}$ = 100, $M_{LED\ i=8}$ = 150 und $M_{LED\ i=9}$ = 200.

In einem weiteren Aspekt wird die Aufgabe gelöst durch ein Verfahren zum Ermitteln einer ersten Sonnenlichtintensitätsmatrix für eine zuvor beschriebene Produktionsvorrichtung. In einem ersten Schritt wird ein digitales Abbild eines ersten Pflanzenaufstellbereiches als Teilbereich einer Produktionsvorrichtung erstellt. In einem zweiten Schritt wird das digitale Abbild in eine Simulationsumgebung überführt. Eine parametrierbare Strahlungsquelle wird in einem dritten Schritt in die Simulationsumgebung integriert. In einem vierten Schritt wird eine Vielzahl erster Simulationsläufe unter Berücksichtigung des ersten Pflanzenaufstellbereiches und unter Verwendung einer Vielzahl Strahlungsquellenparametrierungen, welche in ihrer Gesamtheit eine datums- und/oder tageszeitabhängige Stellung der parametrierbaren Strahlungsquelle über ein Jahr repräsentieren, durchgeführt. Die Ergebnisse der ersten Simulationsdurchläufe werden in einem fünften Schritt in der ersten Sonnenlichtintensitätsmatrix zusammengeführt. Das erfindungsgemäße Verfahren ermöglicht mit anderen Worten vorteilhafterweise eine einfache Ermittlung der jeweiligen Strahlungsintensitäten natürlichen Lichts an den lokalen Pflanzenaufstellbereichen. Eine Änderung der Gegebenheiten in der Produktionsvorrichtung kann, ohne dass weitere komplexe Änderungen der Berechnungsmethode notwendig sind, durch eine erneute Durchführung der Simulationsdurchläufe ermittelt werden.

Die Merkmale des zweiten und dritten Aspektes, Merkmalskombinationen sowie die sich aus diesen ergebenden Vorteile entsprechen den in Verbindung mit dem ersten Erfindungsaspekt genannten.

Im Weiteren wird die Erfindung anhand von Ausführungsbeispielen näher erläutert. Es zeigen

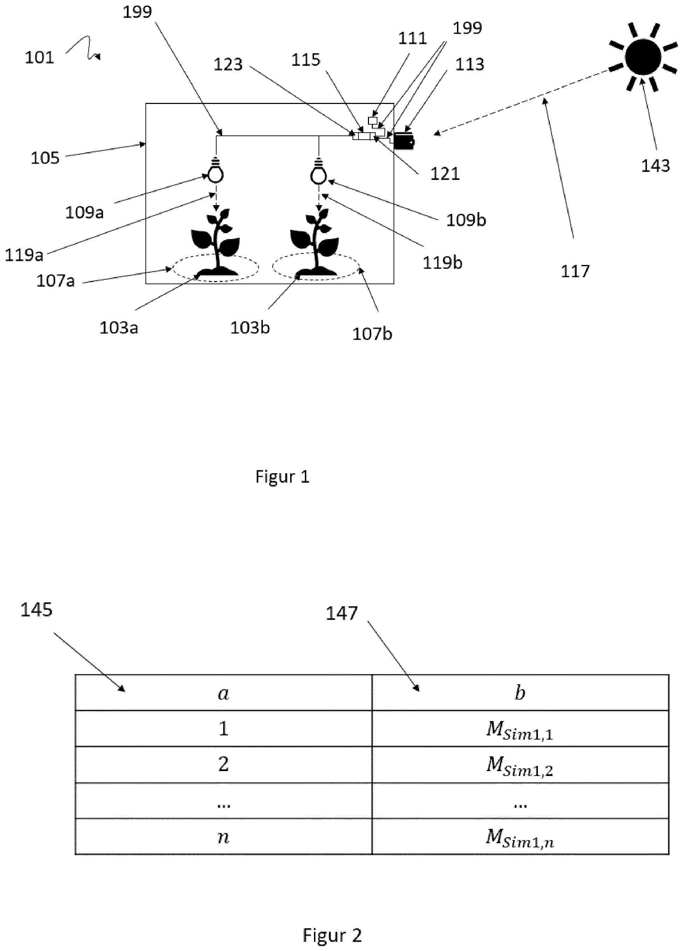

Figur 1    eine schematische Darstellung einer Indoor Vertical Farm mit zwei Pflanzbereichen,

Figur 2    eine Datenbank welche den Sonnenlichtintensitäten Intensitätsmatrizen zuordnet,

Figur 3    Datenbanken zur Bestimmung des Intensitätswerts,

Figur 4    eine schematische Ansicht einer Indoor Vertical Farm mit einer Vielzahl Pflanzenbereiche, sowie

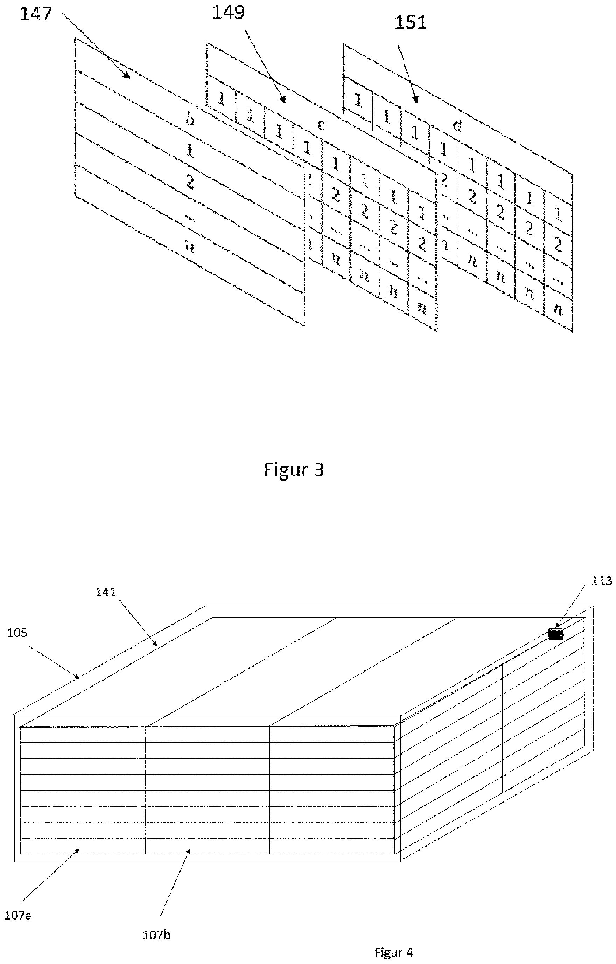

Figur 4    ein Flussdiagramm zum Ermitteln einer Intensitätsmatrix.

Eine Indoor Vertical Farm 101 weist eine Produktionsgebäudehülle 105 auf. Die Produktionsgebäudehülle 105 ist im unteren Bereich gemauert. Der untere Bereich erstreckt sich über ein Fünftel der Höhe der Produktionsgebäudehülle 105. Im oberen Bereich der Produktionsgebäudehülle 105 weist die Produktionsgebäudehülle 105 Glas auf. Alternativ kann die Produktionsgebäudehülle 105 im oberen Bereich auch Plexiglas aufweisen. Zusätzlich weist die Produktionsgebäudehülle 105 im oberen Bereich Stahlverstrebungen auf. Die Stahlverstrebungen realisieren eine Stabilität der Glasfelder beziehungsweise Plexiglasfelder. An der Außenhülle der Produktionsgebäudehülle 105 ist ein photoelektrischer Sensor 113 angeordnet. Der photoelektrische Sensor 113 ermittelt die aktuelle Sonnenlichtintensität $\dot{E}_{sensor}$ 117, welche von der Sonne 143 ausgestrahlt wird. Der photoelektrische Sensor 113 ist mittels eines Datenkabels mit einem Dateneingang 121 eines Steuergerätes 115 verbunden. Das Steuergerät 115 ist mittels des Dateneingangs 121 zudem mit einem Datenkabel 199 mit einem Speicher 111 verbunden. Das Steuergerät 115 ist darüber hinaus mit einem Datenausgang 123 über ein Datenkabel 199 mit einer ersten dimmbaren LED 109a und einer zweiten dimmbaren LED 109b verbunden. Die erste dimmbare LED 109a bestrahlt eine erste Pflanze 103a in einem ersten Pflanzbereich 107a mit einer künstlichen Lichtleistung $M_{LED1}$ 119a und die zweite dimmbare LED 109b bescheint eine zweite Pflanze 103b in einem zweiten Pflanzbereich 107b mit einer zweiten künstlichen Lichtleistung $M_{LED2}$ 119b. Der erste Pflanzenbereich 107a und der zweite Pflanzenbereich 107b sind alternativ in einem Regal 141 angeordnet und weisen benachbarte Pflanzenbereiche auf.

Der photoelektrische Sensor 113 übermittelt die gemessene aktuelle Sonnenlichtintensität $\dot{E}_{sensor}$ 117 über den Dateneingang an das Steuergerät. Das Steuergerät ermittelt aus einer Datenbank, welche in einer ersten Datenbankspalte a 145 eine Vielzahl Werte einer Sonnenlichtintensität $\dot{E}_{Sensor\,i, i=1\ldots n}$ und in einer zweiten Datenbankspalte b 147 den Sonnenlichtintensitäten $\dot{E}_{Sensor\,i,\ i=1\ldots n}$ zugeordnete Intensitätsmatrizen $M_{Sim\,k,i}$ (mit i=1...n und k = Pflanzenaufstellbereich) aufweist, den gültigen Intensitätswert $M_{Sim\,1,i}$ und hieraus die erste natürliche Lichtleistung $M_{P1,i}$ an der ersten Pflanze 103a, wobei für i=1 $M_{P1,1} = \dot{E}_{Sensor1} \cdot M_{Sim1,1}$. Weiter ermittelt das Steuergerät 115 anhand der natürlichen Lichtleistung an der Pflanze $M_P$ und der Solllichtleistung $M_{Soll}$ 135 die notwendige künstliche Lichtleistung $M_{LED1}$ 119a beziehungsweise für den zweiten Pflanzenbereich 107b die künstliche Lichtleistung $M_{LED2}$ 119b. Der jeweils gültige Intensitätswert $M_{Sim\,1,i}$ der Intensitätsmatrizen $M_{Sim\,k,i}$ ergibt sich unter Berücksichtigung des tageszeitabhängigen Faktors c 149 und des jahreszeitabhängigen Faktors d 151.

Alternativ kann das Steuergerät 115 auch eingerichtet sein, anhand der aktuellen Sonnenlichtintensität $\dot{E}_{sensor}$ 117 sowie der Intensitätsmatrix $M_{Sim}$ 131 und der Solllichtleistung $M_{Soll}$ 135, auch Solllichtintensität genannt, direkt die erste künstliche Lichtleistung $M_{LED1}$ 119a beziehungsweise zweite künstliche Lichtleistung $M_{LED2}$ 119b zu ermitteln.

Zum Ermitteln der Intensitätsmatrix $M_{Sim}$ 131 wird in einem Schritt ein digitales Abbild eines ersten Pflanzbereiches 107a als Teilbereich der Produktionsfläche einer Indoor Vertical Farm 101 erstellt 200 und dieses in einem weitern Schritt in eine Simulationsumgebung überführt 300. In die Simulationsumgebung wird in einem zusätzlichen Schritt die Sonne 143 als parametrierbare Strahlungsquelle integriert 400. Unter Berücksichtigung des ersten Pflanzbereiches 107a und unter Verwendung einer Vielzahl Parametrierungen der Sonne 143, welche in ihrer Gesamtheit eine datumsabhängige und/oder tageszeitabhängige Stellung der Sonne 143 über ein Jahr repräsentieren, wird in einem weiteren Schritt eine Vielzahl erster Simulationsdurchläufe durchgeführt 500. Die Ergebnisse der jeweiligen ersten Simulationsdurchläufe werden in der Intensitätsmatrix $M_{Sim}$ 131 zusammengeführt 600 und zusätzlich oder alternativ gespeichert.

Bezugszeichenliste

    101 Indoor Vertical Farm
    103a erste Pflanze
    103b zweite Pflanze
    105 Produktionsgebäudehülle
    107a erster Pflanzbereich
    107b zweiter Pflanzbereich
    109a erste dimmbare LED
    109b zweite dimmbare LED
    111 Speicher
    113 Photoelektrischer Sensor
    115 Steuergerät
    117 aktuelle Sonnenlichtintensität $\dot{E}_{sensor}$
    119a erste künstliche Lichtleistung $M_{LED1}$
    119b zweite künstliche Lichtleistung $M_{LED2}$
    121 Dateneingang
    123 Datenausgang
    131 Intensitätsmatrix $M_{Sim}$
    135 Soll-Lichtleistung $M_{Soll}$
    141 Regal
    143 Sonne
    145 erste Datenbankspalte a
    147 zweite Datenbankspalte b
    149 tageszeitabhängiger Faktors c
    151 jahreszeitabhängiger Faktors d
    199 Datenkabel
    200 Erstellen eines digitalen Abbilds

300 Überführen in eine Simulationsumgebung
400 Integrieren einer parametrierbaren Strahlungsquelle
500 Durchführen erster Simulationsdurchläufe
600 Zusammenführen der Ergebnisse in der ersten Sonnenlichtintensitätsmatrix

**Patentansprüche**

1.  Produktionsvorrichtung (101) für zumindest eine Pflanze (103), wobei die zumindest eine Pflanze ein Saatgut und/oder ein Keimling und/oder ein Sprössling und/oder ein Trieb und/oder eine Blüte und/oder eine Frucht ist, aufweisend eine Gebäudehülle (105), wobei innerhalb der Gebäudehülle (105) zumindest ein erster Pflanzenaufstellbereich (107a) mit einer ersten künstlichen Lichtquelle (109a) angeordnet ist, wobei dem ersten Pflanzenaufstellbereich (107a) eine erste, in einem elektronischen Speicher (111) hinterlegte, Sonnenlichtintensitätsmatrix (131) sowie eine Solllichtintensität (135) zugeordnet ist und wobei die erste künstliche Lichtquelle (109a) den ersten Pflanzenaufstellbereich (107a) zumindest teilweise beleuchtet, wobei an einer Außenmantelfläche der Gebäudehülle (105), in einem Innenraum der Gebäudehülle (105) und/oder zu der Gebäudehülle (105) beabstandet zumindest ein Sensor (113) angeordnet ist, welcher datenaustauschend mit einer Auswerteeinheit (115) verbunden und eingerichtet ist, eine aktuelle Sonnenlichtintensität (117) zu ermitteln, **dadurch gekennzeichnet, dass** die Produktionsvorrichtung (101) ausgestaltet und eingerichtet ist mittels der Auswerteeinheit (111) anhand der ermittelten aktuellen Sonnenlichtintensität (117), der Solllichtintensität (135) und der ersten Sonnenlichtintensitätsmatrix (131) eine erste künstliche Lichtleistung (119) zu ermitteln und ein Signal an die erste künstliche Lichtquelle (109a) zu senden, welche im Ansprechen auf das Signal eine erste künstliche Lichtleistung (119) aussendet.

2.  Produktionsvorrichtung (101) nach Anspruch 1, wobei die Auswerteeinheit (115) einen Dateneingang (121) und einen Datenausgang (123) aufweist und mittels des Dateneingangs (121) datenaustauschend mit dem Speicher (111) und dem Sensor (113) und mittels des Datenausgangs (123) datenaustauschend mit der ersten künstlichen Lichtquelle (109a) verbunden ist.

3.  Produktionsvorrichtung (101) nach einem der vorstehenden Ansprüche, weiter umfassend einen zweiten Pflanzenaufstellbereich (107b), welchem eine zweite, in dem elektronischen Speicher (111) hinterlegte, Sonnenlichtintensitätsmatrix und eine zweite Solllichtintensität zugeordnet ist und eine zweite künstliche Lichtquelle (109b), welche zumindest und/oder teilweise den zweiten Pflanzenaufstellbereich (107b) beleuchtet, wobei die Produktionsvorrichtung (101) weiter ausgestaltet und eingerichtet ist mittels der Auswerteeinheit (115) anhand der aktuellen Sonnenlichtintensität (117) und der zweiten Sonnenlichtintensitätsmatrix eine zweite künstliche Lichtleistung zu ermitteln und ein zweites Signal an die zweite künstliche Lichtquelle (109b) zu senden, welche im Ansprechen auf das zweite Signal die zweite künstliche Lichtleistung (119b) ausstrahlt, wobei die erste künstliche Lichtleistung (119a) der zweiten künstlichen Lichtleistung (119b) entspricht und/oder unterschiedlich zu der zweiten künstlichen Lichtleistung (119b) ist.

4.  Produktionsvorrichtung (101) nach einem der vorstehenden Ansprüche, wobei der erste Pflanzenaufstellbereich (107a) insbesondere zumindest einen Teilbereich einer ersten Pflanze (103a) und/oder ein Pflanzensubstrat aufweist.

5.  Produktionsvorrichtung (101) nach einem der vorstehenden Ansprüche, wobei die erste künstliche Lichtleistung (119) die in Abhängigkeit eines Korrekturfaktors (x) angepasste, mittels insbesondere ausschließlich des Sensors (113) ermittelte aktuelle Sonnenlichtintensität (117) ist.

6.  Produktionsvorrichtung (101) nach Anspruch 5, wobei der Korrekturfaktor (x) mittels Simulationen und/oder KI und/oder Deep Learning ermittelt ist und eine Lichtdurchlässigkeit der Gebäudehülle (105) und/oder eine Beschattung des ersten Pflanzenaufstellbereiches (107a) und/oder eine Reflektion auf den ersten Pflanzenaufstellbereich (107a) berücksichtigt.

7.  Produktionsvorrichtung (101) nach einem der vorstehenden Ansprüche, wobei der erste Pflanzenaufstellbereich (107a) an einer Lagerungseinrichtung (141) angeordnet ist, in welcher eine Vielzahl Pflanzenaufstellbereiche säulenartig vertikal übereinander und/oder reihenartig horizontal nebeneinander in einer der Raumrichtungen anordnenbar.

8.  Produktionsvorrichtung (101) nach einem der vorstehenden Ansprüche, wobei der Sensor (113) ein optischer

**EP 4 573 885 A1**

Detektor und/oder ein optoelektronischer Sensor und/oder ein Photodetektor ist.

9. Lichtsteuerungsvorrichtung zum Steuern von künstlichen Lichtquellen (109a, 109b) in einer Produktionsvorrichtung (101) nach einem der vorstehenden Ansprüche, aufweisend einen Dateneingang (121), mittels welchem die Lichtsteuerungsvorrichtung von einem Sensor (113) erste Sensordaten, welche eine aktuelle Sonnenlichtintensität (117) repräsentieren, und von einem elektronischen Speicher (111) einen ersten Analyseparameter, welcher eine Sonnenlichtintensitätsmatrix (131) repräsentiert, und einen zweiten Analyseparameter, welcher einen lokalen Solllichtintensität (135) repräsentiert, empfängt und einen Datenausgang (123), mittels welchem die Lichtsteuerungsvorrichtung datenaustauschend mit zumindest einer künstlichen Lichtquelle (109a) verbunden ist, wobei die Lichtsteuerungsvorrichtung programmtechnisch dazu eingerichtet ist, unter Verwendung der ersten Sensordaten, des ersten Analyseparameters und des zweiten Analyseparameters eine benötigte künstliche Lichtleistung (119) zu parametrieren und als Steuerungssignal an die künstliche Lichtquelle (109a) zu übermitteln, welche im Ansprechen auf das Steuerungssignal die künstliche Lichtleistung (119) ausgibt.

10. Verfahren zum Ermitteln einer ersten Sonnenlichtintensitätsmatrix für eine Produktionsvorrichtung nach Anspruch 1-8, umfassend die Schritte:

   - Erstellen (200) eines digitalen Abbilds eines ersten Pflanzenaufstellbereiches (107a) als Teilbereich einer Produktionsvorrichtung (101),
   - Überführen (300) des digitalen Abbilds in eine Simulationsumgebung,
   - Integration (400) einer parametrierbaren Strahlungsquelle (143) in die Simulationsumgebung,
   - Durchführen einer Vielzahl erster Simulationsdurchläufe (500) unter Berücksichtigung des ersten Pflanzenaufstellbereiches (107a) und unter Verwendung einer Vielzahl Strahlungsquellenparametrierungen, welche in ihrer Gesamtheit eine datumsabhängige und/oder tageszeitabhängige Stellung der parametrierbaren Strahlungsquelle (143) über ein Jahr repräsentieren,
   - Zusammenführen (600) der Ergebnisse der ersten Simulationsdurchläufe in der ersten Sonnenlichtintensitätsmatrix (131).

Figur 1

| $a$ | $b$ |
|---|---|
| 1 | $M_{Sim1,1}$ |
| 2 | $M_{Sim1,2}$ |
| ... | ... |
| $n$ | $M_{Sim1,n}$ |

Figur 2

147    149    151

Figur 3

141
105
113

107a
107b

Figur 4

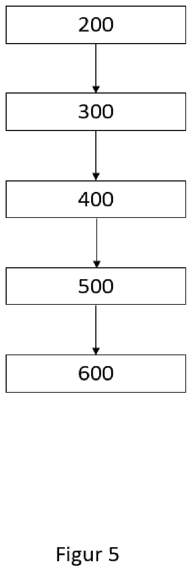

Figur 5

**Europäisches Patentamt**
**European Patent Office**
**Office européen des brevets**

# EUROPÄISCHER RECHERCHENBERICHT

Nummer der Anmeldung

EP 23 21 9673

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 109 561 664 A (TOYO SEIKAN GROUP HOLDINGS LTD) 2. April 2019 (2019-04-02) | 1-5,7-9 | INV. A01G7/04 |
| Y | * Absätze [0007], [0073], [0086], [0089], [0092] - [0095]; Abbildung 1 * | 6 | A01G9/24 G06Q50/02 |
| | - - - - - | | |
| X | US 10 448 483 B2 (SUNTRACKER TECH LTD [CA]) 15. Oktober 2019 (2019-10-15) | 10 | |
| A | * Column 9, lines 29-45 Column 10, lines 22-30 Column 22, lines 12-22 Column 23, lines 40-45 Column 30, lines 27-65 Column 30 line 46 - column 31 line 28 * | 6 | |
| | - - - - - | | |
| Y | US 11 663 414 B2 (FLUENCE BIOENGINEERING INC [US]) 30. Mai 2023 (2023-05-30) * Column 30, lines 47-57 Column 54, lines 1-42 * | 6 | |
| | - - - - - | | |

**RECHERCHIERTE SACHGEBIETE (IPC)**

A01G
G06Q
H05B

Der vorliegende Recherchenbericht wurde für alle Patentansprüche erstellt

| Recherchenort | Abschlußdatum der Recherche | Prüfer |
|---|---|---|
| Den Haag | 5. Juni 2024 | Spitz, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

# EP 4 573 885 A1

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-06-2024

| Im Recherchenbericht angeführtes Patentdokument | Datum der Veröffentlichung | Mitglied(er) der Patentfamilie | Datum der Veröffentlichung |
|---|---|---|---|
| CN 109561664 A | 02-04-2019 | CN 109561664 A | 02-04-2019 |
| | | JP 6862682 B2 | 21-04-2021 |
| | | JP 2017212886 A | 07-12-2017 |
| | | US 2019141905 A1 | 16-05-2019 |
| | | WO 2017208725 A1 | 07-12-2017 |
| US 10448483 B2 | 15-10-2019 | US 2016007426 A1 | 07-01-2016 |
| | | US 2018242429 A1 | 23-08-2018 |
| US 11663414 B2 | 30-05-2023 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20210112728 A1
- KR 102022111434 A
- CN 109156225 A
- CN 109380109 A